# EUROPEAN PATENT SPECIFICATION

(11) **EP 3 988 451 B1**
(45) Date of publication and mention of the grant of the patent: **04.11.2026**
(21) Application number: 21198674.0
(22) Date of filing: 23.09.2021
(51) Int. Cl.: B64D 11/00, B64D 11/04, B62B 5/04, E05C 3/04

(54) **RETENTION SYSTEMS FOR MULTI-CART BAYS**
RÜCKHALTESYSTEME FÜR AUFNAHME FÜR MEHRERE WAGEN
SYSTÈMES DE RETENUE POUR BAIES MULTI-CHARIOTS

(30) Priority: 26.10.2020 US 202063105798 P
(43) Date of publication of application: 27.04.2022
(73) Proprietor: B/E Aerospace, Inc., Winston-Salem, NC 27105 (US)
(72) Inventor: CHYLINSKI, Rafal, Milton Keynes, MK10 7EH (GB); WALL, Daniel, Baldock, SG7 5FE (GB); PATIL, Swapnil, Aylesbury, HP18 1AJ (GB)
(74) Representative: Dehns

(56) References cited:
- EP-A1- 3 778 396
- WO-A1-2020/018698
- US-A1- 2019 031 348
- US-A1- 2020 181 942
- US-A1- 2020 317 344

## Description

### FIELD

This disclosure relates to retention systems for multi-cart bays, e.g., for aircraft galleys.

### BACKGROUND

On aircraft for example, the aft facing galleys can have double sized bays able to facilitate full size and half size wheeled carts (also referred to as trolleys) which require a retention mechanism in Taxi, Take-off, and Landing position as well in order to prevent carts contacting and loading each other over a qualified value in ultimate conditions. Moreover, due to a standard 3-degree incline of an aircraft in cruise, the mechanism must also allow for the operator to operate only the bay's front trolley without the aft trolley rolling.

Conventional methods and systems have generally been considered satisfactory for their intended purpose. However, there is still a need in the art for improved retention systems for cart bays. The present disclosure provides a solution for this need. US 2019/031348 A1 and US 2020/317344 A1 each disclose a system for stowing rollable containers in vehicles. EP 3 778 396 A1 discloses a galley structure for stowing galley carts in an aircraft cabin. US 2020/181942 A1 discloses an aircraft galley module lock-monitoring device. WO 2020/018698 A1 discloses a retainment assembly for use in an aircraft galley.

### SUMMARY

According to a first aspect, a multi-cart bay is provided according to claim 1.

The first retainer can include a first front latch movably (e.g., rotatable) mounted to an actuator surface and configured to move between a first front latch blocking position where the first front latch at least partially blocks an opening of the multi-cart bay to retain the front cart within the multi-cart bay and a first front latch unblocking position where the first front latch does not block the opening of the multi-cart bay. In certain embodiments, the first retainer can be only the first front latch movably mounted to the actuator surface.

The second retainer can include a front actuator mounted to or extending through the actuator surface and configured to move relative to the actuator surface. The second retainer can include a first rod extending from the front actuator rearward.

The second retainer can include a first intermediate latch movably mounted to the multi-cart bay at an intermediate position of the multi-cart bay and connected to the first rod such that the first intermediate latch is actuated by the front actuator. The first intermediate latch can be configured to move between a first intermediate latch blocking position where the first intermediate latch extends into an intermediate portion of the multi-cart bay to block the rear cart within the multi-cart bay from moving forward in the multi-cart bay, and a first intermediate latch unblocking position where the first intermediate latch does not block the rear cart.

In certain embodiments, the second retainer does not block the front cart in the first intermediate latch blocking position such that the front cart can be removed while the rear cart is blocked. In certain embodiments, the front actuator can be a rotatable tab actuator connected to the rod.

The third retainer can include a second front latch movably mounted to the actuator surface and a second rod extending from the second front latch rearward. The third retainer can include a second intermediate latch movably mounted to the multi-cart bay at the intermediate position of the multi-cart bay and connected to the second rod such that the second intermediate latch is actuated by the second front latch. The second front latch and second intermediate latch can be configured to move together between a dual blocking position and a dual unblocking position. For example, the dual blocking position can be such that the second front latch at least partially blocks an opening of the multi-cart bay to prevent the front cart within the multi-cart bay from leaving the multi-cart bay and the second intermediate latch extends into the intermediate portion of the multi-cart bay to block the rear cart within the multi-cart bay from moving forward in the multi-cart bay. The dual unblocking position can be such that the second front latch does not block the opening of the multi-cart bay and the second intermediate latch does not block the rear cart from being removed.

In certain embodiments, in each unblocking position, each latch can be horizontal and may not extend downward into the multi-cart bay. In certain embodiments, each intermediate latch can position at the same distance from the opening of the multi-cart bay.

The first front latch and the first intermediate latch can move (e.g., rotate) in a first direction (e.g., counterclockwise to the blocking position), and the second front latch and the second intermediate latch can move (e.g., rotate) in a second direction (e.g., clockwise to the blocking position) opposite to the first direction.

The multi-cart bay can be an aircraft galley sized to hold at least one standard full-size cart and at least one standard half-size cart, or two standard full-size carts. The actuator surface can be the galley workface configured to be covered by one or more galley doors, for example.

In certain embodiments, a rear portion of the multi-cart bay, rearward of the first and second intermediate latches, can be sized to hold a standard full size cart. In certain embodiments, a front portion of the multi-cart bay, frontward of the first and second intermediate latches, can be sized to hold a standard half-sized cart.

In certain embodiments, the system can include the multi-cart bay and one or more galley doors that can be configured to enclose the multi-cart bay. The one or more galley doors can be configured to receive the first front latch, the second front latch, and the front actuator only when in a respective blocking position such that the one or more galley doors are configured to close only when all are in the blocking position.

In accordance with at least one aspect of this disclosure, an aircraft galley can include a cart retention system for a multi-cart bay. The cart retention system can be any suitable cart retention system disclosed herein, e.g., as described above. The system can include a backstop configured to mount in the multi-cart bay and having an interchangeable packer for accommodating different length full size and/or half size carts.

According to a second aspect, a method is provided according to claim 2.

The method can include removing the front cart from the aircraft galley after moving the second front latch and the second intermediate retainer to the dual unblocking position. The method can include moving the first intermediate latch to a first intermediate latch unblocking position to free the rear cart.

The method can include removing the rear cart from the aircraft galley after moving the first intermediate latch to the first intermediate latch unblocking position. The method can include conducting the method in reverse to store the rear cart and the front cart. The method can include any other suitable method(s) and/or portion(s) thereof.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a perspective view of an embodiment of a system in accordance with this disclosure, showing having all retainers in a blocking position;
Fig. 2 is a perspective view of the embodiment of Fig. 1, showing having a third retainer in a dual unblocking position with the other retainers in a blocking position;
Fig. 3 shows a top perspective schematic view of an embodiment of a system in accordance with this disclosure, shown installed on a multi-cart bay;
Fig. 4 shows a bottom perspective view of an embodiment of a system in accordance with this disclosure, shown installed in a multi-cart bay and with all retainers in the blocking position;
Fig. 5 shows a front view of the embodiment of Fig. 4, shown having carts in side-by-side multi-cart bays;
Fig. 6 shows a see-through schematic embodiment of a bay door configured to receive the system when all retainers are in the blocking system, showing the retainers in a blocking position;
Fig. 7 shows a front schematic view of an embodiment of a system retaining a plurality of carts within the cart bay;
Fig. 8 shows a side schematic view of the embodiment of Fig. 7;
Fig. 9 shows an embodiment of a latching sequence and method in accordance with this disclosure;

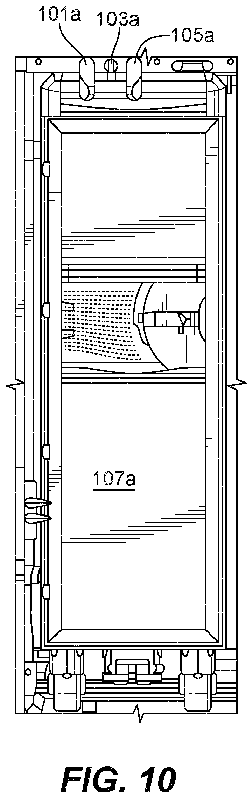

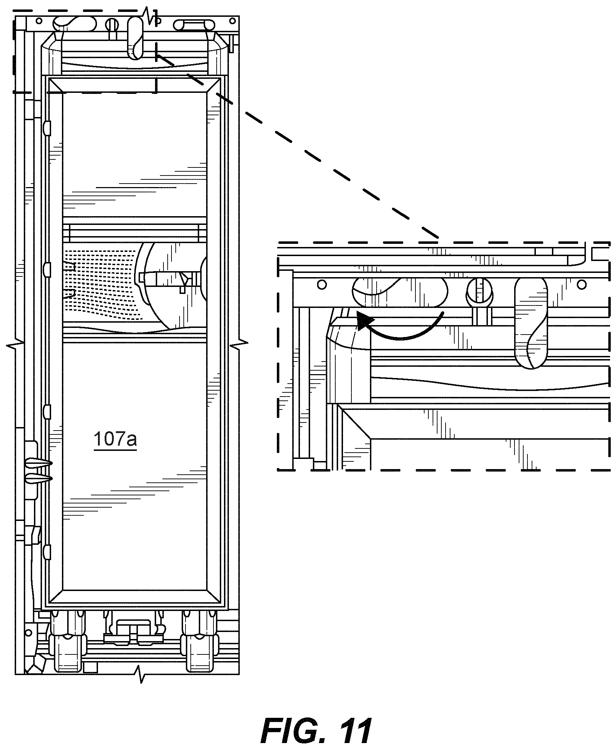

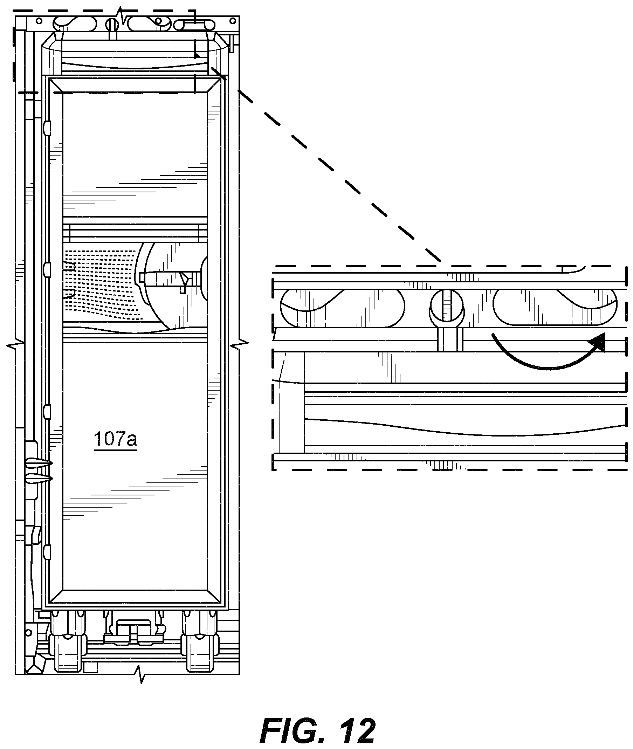

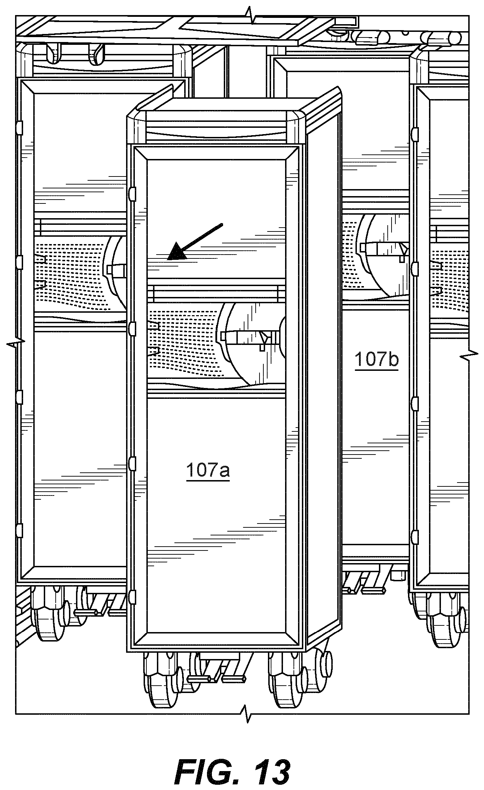

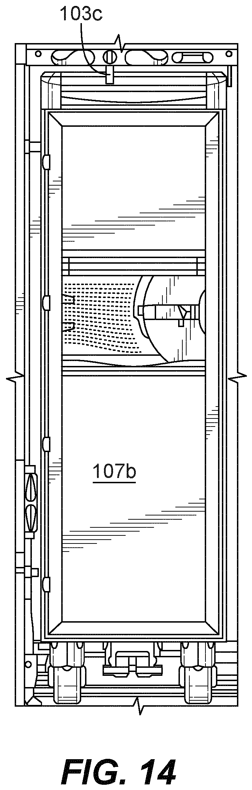

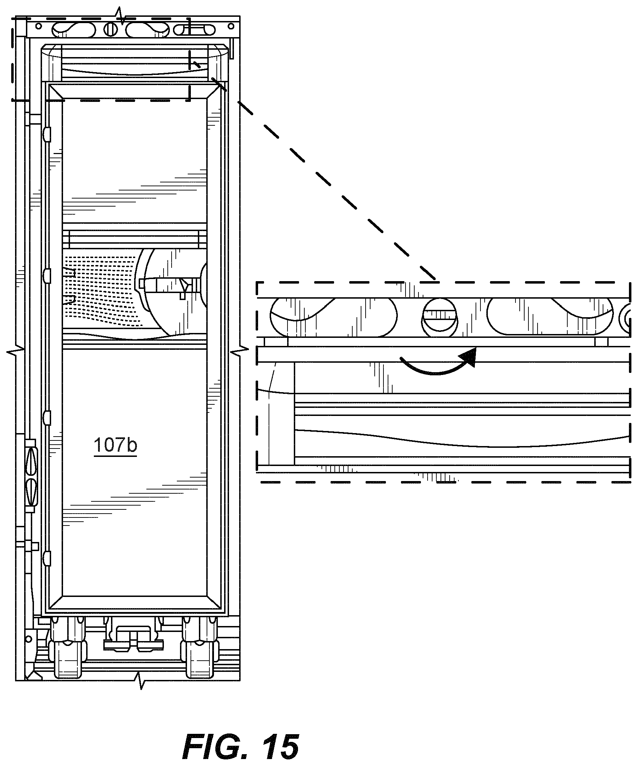

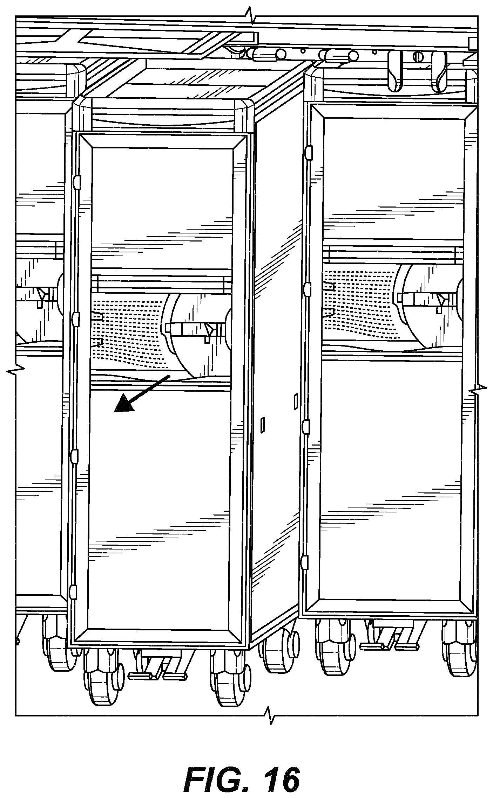

Figs. 10-16 illustrate an embodiment of a method in accordance with this disclosure, wherein Fig. 10 shows all retainers in a blocking position, wherein Fig. 11 shows a first retainer moved to an unblocking position, wherein Fig. 12 shows a third retainer moved to a dual unblocking position, wherein Fig. 13 shows a front cart being removed, wherein Fig. 14 shows a rear cart within a rear portion of the multi-cart bay and blocked by a second retainer, wherein Fig. 15 shows the second retainer being moved to an unblocking position, and wherein Fig. 16 shows removal of the rear cart from the multi-cart bay and
Fig. 17 is a perspective view of an embodiment of a back stop in accordance with this disclosure.

### DETAILED DESCRIPTION

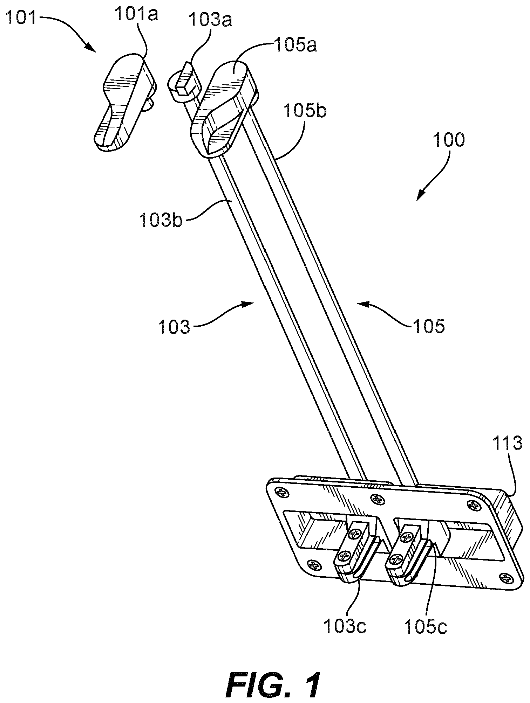

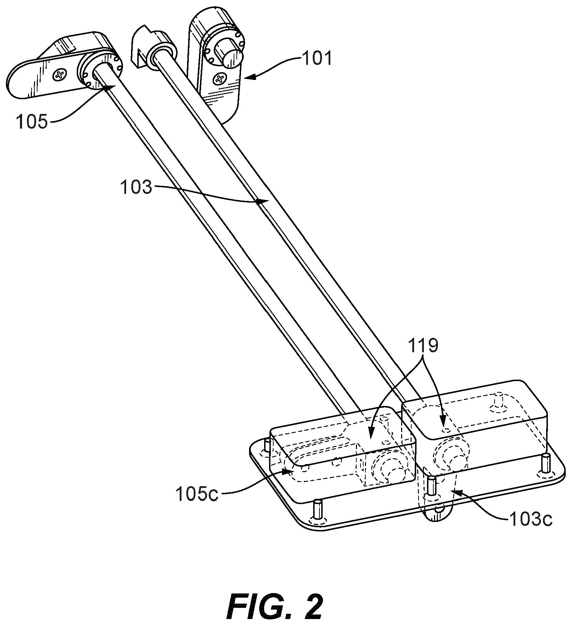

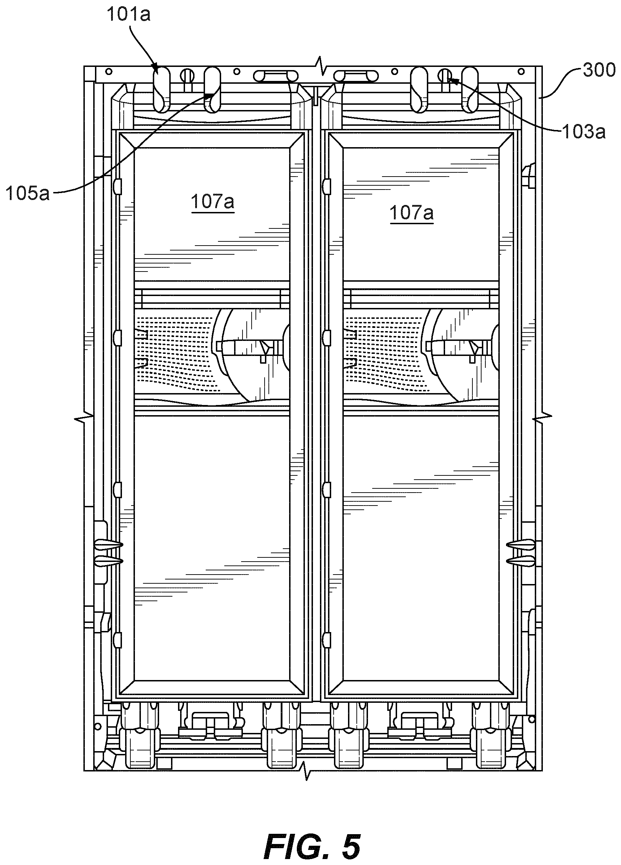

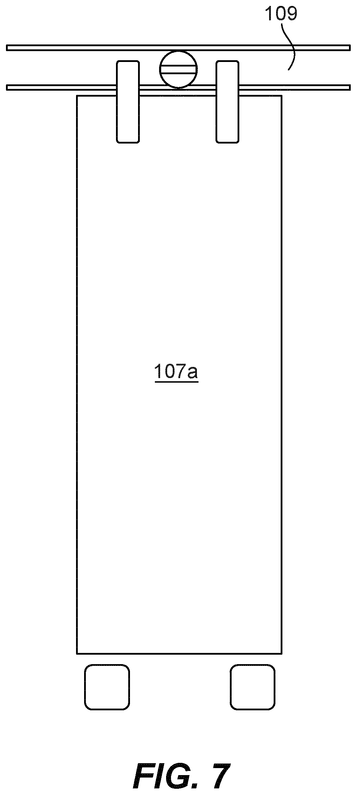

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-17. Certain embodiments described herein can be used to provide more efficient aircraft galley that can safely retain larger or more carts (also referred to as trolleys).

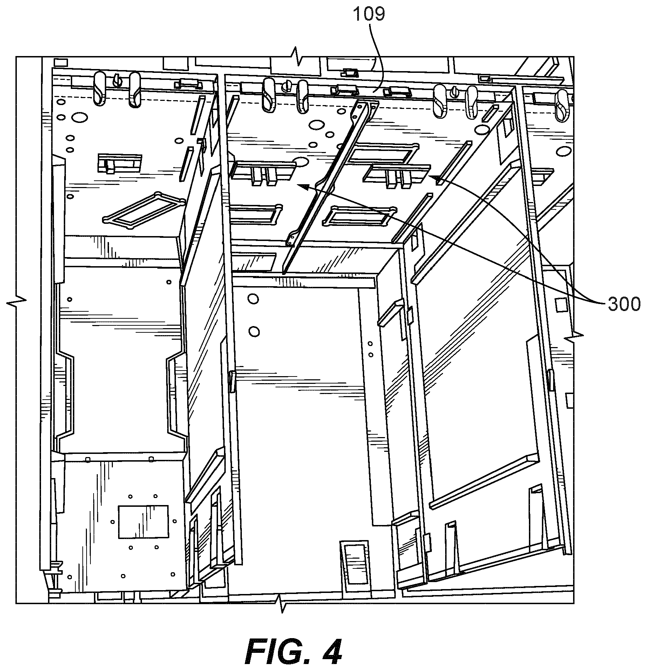

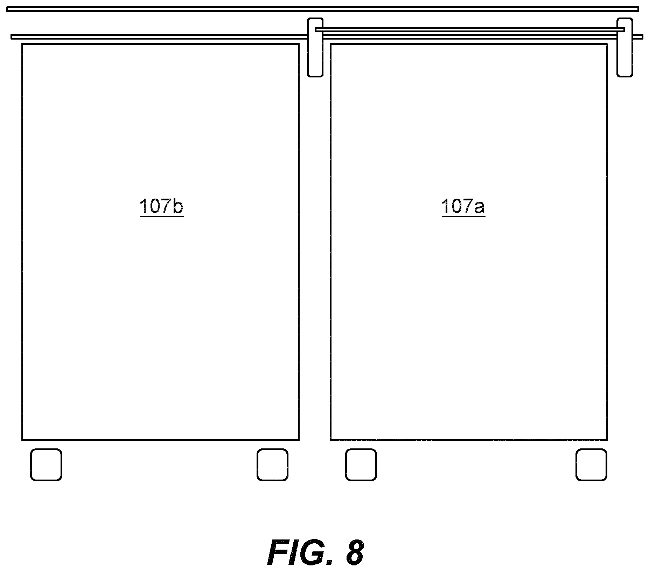

Referring to Figs. 1 and 2, a cart retention system 100 for a multi-cart bay (e.g., as shown in Fig. 4, Fig. 8, etc.) can include a first retainer 101 configured to retain a front cart (e.g., front cart 107a as shown in Fig. 8) as in the multi-cart bay and a second retainer 103 configured to retain a rear cart (e.g., rear cart 107b) in the multi-cart bay such that the rear cart is held spaced from the front cart. The system 100 includes a third retainer 105 configured to retain both the front cart and the rear cart in the multi-cart bay separate from each other.

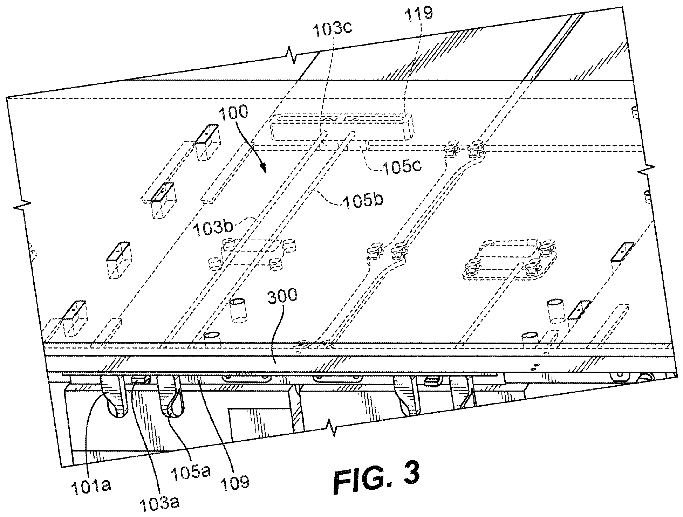

The first retainer 101 can include a first front latch 101a movably (e.g., rotatably) mounted to an actuator surface 109 (e.g., as shown in Figs. 3 and 4) and configured to move between a first front latch blocking position (e.g., as shown in Fig. 1) where the first front latch 101 at least partially blocks an opening (e.g., the front opening as shown in Fig. 4) of the multi-cart bay to retain the front cart within the multi-cart bay and a first front latch unblocking position (e.g., as shown in Fig. 11) where the first front latch 101a does not block the opening of the multi-cart bay. In certain embodiments, e.g., as shown, the first retainer 101 can be only the first front latch 101a movably mounted to the actuator surface 109.

The second retainer 103 can include a front actuator 103a mounted to or extending through the actuator surface 109 and configured to move relative to the actuator surface 109. The second retainer 103 can include a first rod 103b extending from the front actuator 101a rearward.

The second retainer 103 can include a first intermediate latch 103c movably mounted to the multi-cart bay (e.g., via housing 113) at an intermediate position (e.g., half depth, one third depth) of the multi-cart bay and connected to the first rod 103b such that the first intermediate latch 103c is actuated by the front actuator 103a. The first intermediate latch 103c can be configured to move between a first intermediate latch blocking position (e.g., as shown in Fig. 1) where the first intermediate latch 103c extends into an intermediate portion of the multi-cart bay to block the rear cart within the multi-cart bay from moving forward in the multi-cart bay, and a first intermediate latch unblocking position where the first intermediate latch 103c does not block the rear cart.

**In** certain embodiments, e.g., as shown, the second retainer 103 (e.g., the front actuator 103a) does not block the front cart in the first intermediate latch blocking position such that the front cart can be removed while the rear cart is blocked. For example, in certain embodiments, the front actuator 103a can be a rotatable tab actuator connected to the rod 103b (e.g., that does not block the front cart in any position).

The third retainer 105 can include a second front latch 105a movably mounted to the actuator surface 109 and a second rod 105b extending from the second front latch 105a rearward. The third retainer 105 can include a second intermediate latch 105c movably mounted to the multi-cart bay (e.g., via housing 113) at the intermediate position (e.g., between the front cart 107a and back cart 107b as shown in Fig. 8) of the multi-cart bay and connected to the second rod 105b such that the second intermediate latch 105c is actuated by the second front latch 105a. The second front latch 105a and second intermediate latch 105c can be configured to move together, e.g., due to being mechanically connected as shown, between a dual blocking position and a dual unblocking position. For example, the dual blocking position can be such that the second front latch 105a at least partially blocks an opening of the multi-cart bay to prevent the front cart within the multi-cart bay from leaving the multi-cart bay and the second intermediate latch 105c extends into the intermediate portion (e.g., between one or more front carts and one or more back carts) of the multi-cart bay to block the rear cart within the multi-cart bay from moving forward in the multi-cart bay. The dual unblocking position can be such that the second front latch 105a does not block the opening of the multi-cart bay and the second intermediate latch 105c does not block the rear cart from being removed.

While mechanical arrangements have been shown, it is contemplated that the retainers 101, 103, 105 can employ any suitable electromechanical actuators and/or latches. Any other suitable arrangement is contemplated herein.

**In** certain embodiments, in each unblocking position, each latch 101a, 105a, 103c, 105c can be horizontal (e.g., as shown in Fig. 12) and may not extend downward into the multi-cart bay. **In** certain embodiments, each intermediate latch 103c, 105c can position at the same distance (e.g., longitudinal distance/depth into the bay) from the opening of the multi-cart bay. As shown, the intermediate latches 103c, 105c can be housed in a common housing 119 (e.g., rotatably connected to the housing 119 and configured to be rotated by a respective rod 103b, 105b). Any other suitable arrangement is contemplated herein.

In certain embodiments, the first front latch 101a and the first intermediate latch 103c can move (e.g., rotate) in a first direction (e.g., counterclockwise to the blocking position as shown), and the second front latch 105a and the second intermediate latch 105c can move (e.g., rotate) in a second direction (e.g., clockwise to the blocking position as shown) opposite to the first direction. Any other suitable arrangement and/or direction of actuation is contemplated herein.

In certain embodiments, the intermediate latches 103c, 105c can include a biasing member 119 (e.g., an indent spring mechanism) to bias the latches 103c, 105c toward the blocking position when not fully moved to the unblocking position. Any suitable biasing arrangement is contemplated herein.

In certain embodiments, referring to Figs. 3-5, for example, the multi-cart bay 300 can be an aircraft galley sized to hold at least one standard full-size cart and at least one standard half-size cart, or two standard full-size carts. One having ordinary skill in the art of commercial aircraft understands what standard size full-size and half-size carts are. The actuator surface 109 can be the galley workface configured to be covered by one or more galley doors (not shown), for example.

In certain embodiments, a rear portion of the multi-cart bay 300, rearward of the first and second intermediate latches 103c, 105c, can be sized to hold a standard full size cart. In certain embodiments, a front portion of the multi-cart bay 300, frontward of the first and second intermediate latches 103c, 105c, can be sized to hold a standard half-sized cart. Any other suitable configuration (e.g., bay sized to fit two full size carts) is contemplated herein.

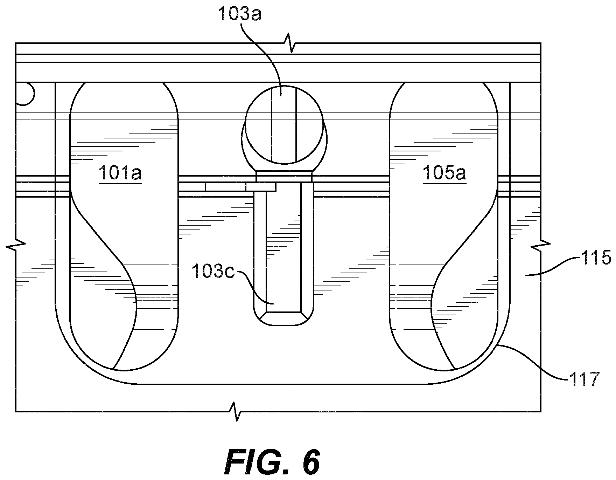

In certain embodiments, the system 100 can include the multi-cart bay 300 and one or more galley doors (not shown) that can be configured to enclose the multi-cart bay. Referring to Fig. 6, the one or more galley doors 115 (shown in phantom) can be configured to receive (e.g., in shaped pocket 117) the first front latch 101a, the second front latch 105a, and the front actuator 103a only when in a respective blocking position such that the one or more galley doors 115 are configured to close only when all are in the blocking position (to require a user to engage all latches before closing the doors). Any other suitable arrangement is contemplated herein.

In accordance with at least one aspect of this disclosure, an aircraft galley can include a cart retention system for a multi-cart bay, e.g., as shown in Figs. 1-8. The cart retention system can be any suitable cart retention system disclosed herein, e.g., as described above.

In certain embodiments, the intermediate retainers can be rotatably mounted to a housing attached (e.g., screwed) to an upper panel of galley. In certain embodiments, intermediate retainers can have different lengths and/or shape, e.g., depending on shape of the trolley, to have desired points of engagement (e.g., to prevent kicking on half size trolley). Certain embodiments can have features that only allow retainers to move between two positions.

Embodiments can include packers attached to (screwed to) the intermediate latches. The packers 114 can be mounted to allow modification of a position of each packer to control a space size in the galley (e.g., for a tighter or looser fit). In certain embodiments, the packers can be interchangeable to different sizes to accommodate different length full size and half size carts.

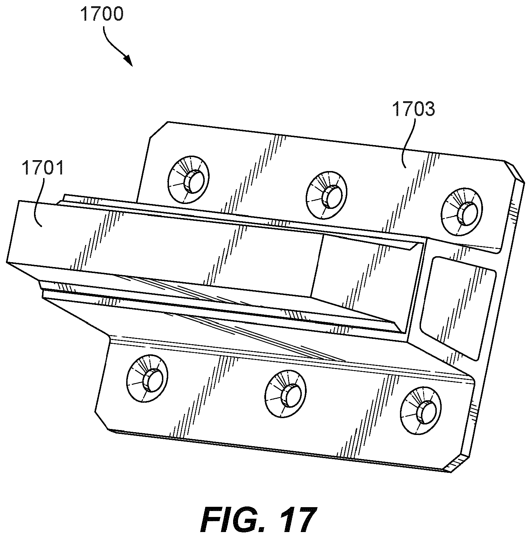

Certain embodiments can also have additional provisions to accommodate different length of half and full size carts/trolleys. For example, the system 100 can include a backstop 1700 configured to mount in the multi-cart bay and having an interchangeable packer 1701 for accommodating different length full size and/or half size carts Referring to Fig. 17, the backstop 1700 can be installed on an axially facing back surface of the bay (e.g., the back surface shown in Fig. 4) or any other suitable location to provide a back stop to the rear cart/trolley. In certain embodiments, the backstop 1700 can include a packer 1701 extending from a rear flange 1703. The packer 1701 can be configured to provide a contact surface and the flange 1703 can be configured to mount to a rear wall. Any other suitable structure is contemplated herein. The packer 1701 can be replaceable to allow insertion of different sizes to accommodate different size full size and/or half size carts/trolleys. The packer 1701 can be made of any suitable material (e.g., an elastic and/or soft material).

In certain embodiments, a half size cart can be secured between front latches 101a, 103a and intermediate latches 103c, 105c. A full size cart can be secured between intermediate latches 103c, 105c and one or more backstops 1700. In certain embodiments, there can be replaceable packers on intermediate latches 103c, 105c which can be replaced with required thickness (e.g., up to space allowable within housing 113 in the retracted position) to accommodate different lengths of half size carts. Embodiments can include a replaceable packer 1701 on each backstop 1700 which can be replaced with required thickness to accommodate different length of full size carts/trolleys.

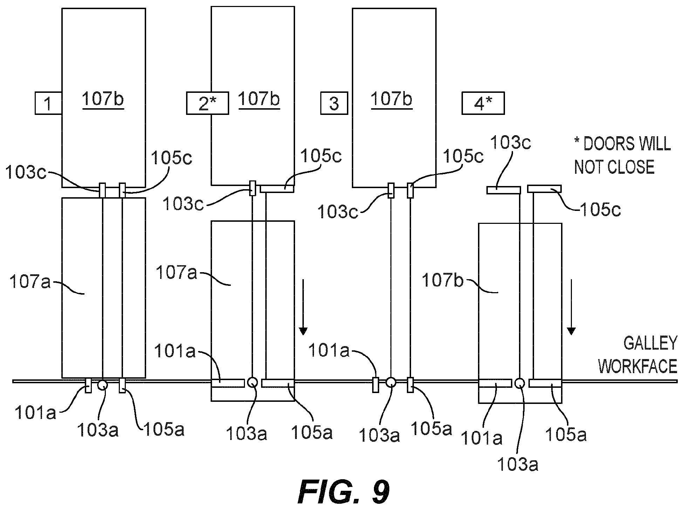

In accordance with at least one aspect of this disclosure, e.g., as shown in Figs. 9 as appreciated by one having ordinary skill in the art, and as shown in Figs. 10-16, a method can include moving a first front latch 101a of an aircraft galley from a first front latch blocking position (e.g., as shown in Fig. 10) to a first front latch unblocking position (e.g., as shown in Fig. 11) to partially unblock a front cart 107a. After moving the first front latch 101a to the first front latch unblocking position, and while leaving a first intermediate latch 103c of the aircraft galley in a first intermediate latch blocking position, the method includes moving a second front latch 105a and a second intermediate latch 105c of the aircraft galley together to a dual unblocking position (e.g., as shown in Fig. 12) to completely unblock the front cart 107a while continuing blocking the rear cart 107b from moving forward.

The method can include removing the front cart 107a (e.g., as shown in Fig. 13) from the aircraft galley after moving the second front latch 105a and the second intermediate retainer 105c to the dual unblocking position. As shown in Fig. 14, the rear cart 107b can continue to be retained by the first intermediate latch 103c. The method can include moving the first intermediate latch 103c to a first intermediate latch unblocking position (e.g., as shown in Fig. 15) to free the rear cart 107b.

The method can include removing the rear cart 107b from the aircraft galley after moving the first intermediate latch 103c to the first intermediate latch unblocking position (e.g., as shown in Fig. 16). The method can include conducting the method in reverse to store the rear cart 107b and the front cart 107a. The method can include any other suitable method(s) and/or portion(s) thereof. Any suitable method disclosed herein can be performed in any suitable order (e.g., in the disclosed order) or in other suitable order.

Certain embodiments include a cart retention mechanism for application in extended depth galley cart bays, for example. Certain embodiments can be applicable to any suitable aircraft or other suitable vehicle.

In a traditional galley, two half-size carts can be stored which are made to take the load from each other. Certain galleys can be configured to fit a full size cart (e.g., 810mm ARINC standard) and a half size cart (e.g., 405mm ARING standard). The half size cart may not be qualified to take load from the full size cart, and the full size cart may not be qualified to take additional load as it is usually stored alone.

**In** order to properly separate carts in such situations, embodiments can include a system with a double intermediate retainer which can double the retaining function at the intermediate position. **In** an aftward load, in certain embodiments, a half size cart can push against intermediate retainers. **In** forward load, in certain embodiments, the half size cart can press against the front levers and the full size cart can push against the double intermediate retainers ensuring that the two carts do not share load with each other.

Certain embodiments can be implemented in a galley that can fit two full size carts, for example. Any other suitable use is contemplated herein.

Embodiments can include one intermediate retainer that is independent, and one intermediate retainer that is connected by a shaft to a front latch. Embodiments can maintain a standard number of levers while providing added functionality and strength. **In** certain embodiments, all retainers must be down to close the galley bay doors.

Certain embodiments can include the same operation as a standard-size, 2 half size trolley bays (operator-friendly design). Embodiments can be compact and replaceable, provide redundant function of retention, and provide enhanced safety (e.g., trolley bay doors can prevent closure with retracted retainers).

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. **In** general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the claims.

## Claims

1. A multi-cart bay (300) wherein the multi-cart bay includes an actuator surface (109), comprising:
a front cart (107a);
a rear cart (107b);
a cart retention system (100); the cart retention system comprising:
a first retainer (101) configured to retain the front cart (107a) in the multi-cart bay;
a second retainer (103) configured to retain the rear cart (107b) in the multi-cart bay such that the rear cart is held spaced from the front cart; and
a third retainer (105) **characterized in that** the third retainer is configured to retain each of the front cart and the rear cart, and further configured to retain both the front cart and the rear cart in the multi-cart bay separate from each other such that the rear cart is held spaced from the front cart.

2. The multi-cart bay of claim 1, wherein the first retainer includes a first front latch (101a) movably mounted to the actuator surface (109) and configured to move between:
a first front latch blocking position where the first front latch at least partially blocks an opening of the multi-cart bay to retain the front cart within the multi-cart bay; and
a first front latch unblocking position where the first front latch does not block the opening of the multi-cart bay.

3. The multi-cart bay of claim 2, wherein the first retainer consists of the first front latch movably mounted to the actuator surface.

4. The multi-cart bay of claim 2 or 3, wherein the multi-cart bay includes an intermediate portion, and wherein the second retainer includes:
a front actuator (103a) mounted to or extending through the actuator surface and configured to move relative to the actuator surface;
a first rod (103b) extending from the front actuator rearward; and
a first intermediate latch (103c) movably mounted to the multi-cart bay at an intermediate position of the multi-cart bay and connected to the first rod such that the first intermediate latch is actuated by the front actuator, the first intermediate latch configured to move between:
a first intermediate latch blocking position where the first intermediate latch extends into the intermediate portion of the multi-cart bay to block the rear cart within the multi-cart bay from moving forward in the multi-cart bay; and
a first intermediate latch unblocking position where the first intermediate latch does not block the rear cart.

5. The multi-cart bay of claim 4, wherein the second retainer does not block the front cart in the first intermediate latch blocking position such that the front cart can be removed while the rear cart is blocked.

6. The multi-cart bay of claim 4 or 5, wherein the front actuator is a rotatable tab actuator connected to the rod.

7. The multi-cart bay of any of claims 2 to 6, wherein the multi-cart bay includes an opening, and wherein the third retainer includes:
a second front latch (105a) movably mounted to the actuator surface;
a second rod (105b) extending from the second front latch rearward; and
a second intermediate latch (105c) movably mounted to the multi-cart bay at the intermediate position of the multi-cart bay and connected to the second rod such that the second intermediate latch is actuated by the second front latch, wherein the second front latch and second intermediate latch are configured to move together between:
a dual blocking position where the second front latch at least partially blocks the opening of the multi-cart bay to prevent the front cart within the multi-cart bay from leaving the multi-cart bay and the second intermediate latch extends into the intermediate portion of the multi-cart bay to block the rear cart within the multi-cart bay from moving forward in the multi-cart bay; and
a dual unblocking position where the second front latch does not block the opening of the multi-cart bay and the second intermediate latch does not block the rear cart from being removed; and optionally wherein in each unblocking position, each latch (101a, 105a, 105c) is horizontal and does not extend downward into the multi-cart bay.

8. The multi-cart bay of claim 7, when dependent upon claim 4, wherein each intermediate latch (103c, 105c) is positioned at the same distance from the opening of the multi-cart bay; and optionally wherein the first front latch and the first intermediate latch move in a first direction, and the second front latch and the second intermediate latch move in a second direction opposite to the first direction.

9. The multi-cart bay of claim 7 or 8, wherein the multi-cart bay is an aircraft galley sized to hold at least one standard full-size cart and at least one standard half-size cart, or two standard full-size carts, wherein the actuator surface is the galley workface configured to be covered by one or more galley doors.

10. The multi-cart bay of claim 9, wherein a rear portion of the multi-cart bay, rearward of the first and second intermediate latches, is sized to hold a standard full size cart, and wherein a front portion of the multi-cart bay, frontward of the first and second intermediate latches, is sized to hold a standard half-sized cart; and
optionally further comprising the multi-cart bay and one or more galley doors configured to enclose the multi-cart bay, wherein the one or more galley doors (115) are configured to receive the first front latch, the second front latch, and the front actuator only when in a respective blocking position such that the one or more galley doors are configured to close only when all the latches are in the blocking position.

11. An aircraft galley, comprising:
the multi-cart bay according to any of claims 1 to 10; optionally comprising a backstop (1700) configured to mount in the multi-cart bay and having an interchangeable packer (1701) for accommodating different length full size and/or half size carts.

12. A method for operating a multi-cart bay (300) of an aircraft galley, wherein the multi-cart bay is the multi-cart bay of claim 7, when dependent on claim 4 or of claims 8-10, the method comprising:
moving the first front latch (101a) of the aircraft galley from the first front latch blocking position to the first front latch unblocking position to partially unblock the front cart (107a); and
after moving the first front latch (101a) to the first front latch unblocking position, and while leaving the first intermediate latch (103c) of the aircraft galley in the first intermediate latch blocking position, moving the second front latch (105a) and the second intermediate latch (105c) of the aircraft galley together to the dual unblocking position to completely unblock the front cart while continuing blocking the rear cart (107b) from moving forward;
moving the first intermediate latch to a first intermediate latch unblocking position to free the rear cart.

13. The method of claim 12, further comprising removing the front cart from the aircraft galley after moving the second front latch and the second intermediate retainer to the dual unblocking position.

14. The method of claim 12, further comprising removing the rear cart from the aircraft galley after moving the first intermediate latch to the first intermediate latch unblocking position; and optionally further comprising conducting the method in reverse to store the rear cart and the front cart.

## Patentansprüche

1. Mehrwagenfach (300), wobei das Mehrwagenfach eine Aktuatorfläche (109) beinhaltet, umfassend:
einen vorderen Wagen (107a);
einen hinteren Wagen (107b);
ein Wagenrückhaltesystem (100); wobei das Wagenrückhaltesystem Folgendes umfasst:
eine erste Rückhaltevorrichtung (101), die ausgelegt ist, den vorderen Wagen (107a) in dem Mehrwagenfach zurückzuhalten;
eine zweite Rückhaltevorrichtung (103), die ausgelegt ist, den hinteren Wagen (107b) in dem Mehrwagenfach derart zurückzuhalten, dass der hintere Wagen beabstandet von dem vorderen Wagen gehalten wird; und
eine dritte Rückhaltevorrichtung (105), **dadurch gekennzeichnet, dass** die dritte Rückhaltevorrichtung ausgelegt ist, den vorderen Wagen und den hinteren Wagen jeweils zurückzuhalten, und ferner ausgelegt ist, sowohl den vorderen Wagen als auch den hinteren Wagen in dem Mehrwagenfach voneinander getrennt zurückzuhalten, derart, dass der hintere Wagen beabstandet von dem vorderen Wagen gehalten wird.

2. Mehrwagenfach nach Anspruch 1, wobei die erste Rückhaltevorrichtung einen ersten Vorderriegel (101a) beinhaltet, der beweglich an der Aktuatorfläche (109) montiert und ausgelegt ist, sich zwischen Folgendem zu bewegen:
einer ersten Vorderriegelsperrstellung, in der der erste Vorderriegel eine Öffnung des Mehrwagenfachs zumindest teilweise sperrt, um den vorderen Wagen innerhalb des Mehrwagenfachs zurückzuhalten; und
einer ersten Vorderriegelfreigabestellung, in der der erste Vorderriegel die Öffnung des Mehrwagenfachs nicht sperrt.

3. Mehrwagenfach nach Anspruch 2, wobei die erste Rückhaltevorrichtung aus dem ersten Vorderriegel besteht, der beweglich an der Aktuatorfläche montiert ist.

4. Mehrwagenfach nach Anspruch 2 oder 3, wobei das Mehrwagenfach einen Zwischenabschnitt beinhaltet, und wobei die zweite Rückhaltevorrichtung Folgendes beinhaltet:
einen Vorderaktuator (103a), der an der Aktuatorfläche montiert ist oder sich durch die Aktuatorfläche erstreckt und ausgelegt ist, sich relativ zu der Aktuatorfläche zu bewegen;
eine erste Stange (103b), die sich von dem Vorderaktuator nach hinten erstreckt; und
einen ersten Zwischenriegel (103c), der beweglich an dem Mehrwagenfach an einer Zwischenposition des Mehrwagenfachs montiert und mit der ersten Stange verbunden ist, derart, dass der erste Zwischenriegel durch den Vorderaktuator betätigt wird, wobei der erste Zwischenriegel ausgelegt ist, sich zwischen Folgendem zu bewegen:
einer ersten Zwischenriegelsperrstellung, in der sich der erste Zwischenriegel in den Zwischenabschnitt des Mehrwagenfachs erstreckt, um den hinteren Wagen innerhalb des Mehrwagenfachs gegen ein Bewegen nach vorn in dem Mehrwagenfach zu sperren; und
einer ersten Zwischenriegelfreigabestellung, in der der erste Zwischenriegel den hinteren Wagen nicht sperrt.

5. Mehrwagenfach nach Anspruch 4, wobei die zweite Rückhaltevorrichtung den vorderen Wagen in der ersten Zwischenriegelsperrstellung nicht sperrt, derart, dass der vordere Wagen entnommen werden kann, während der hintere Wagen gesperrt ist.

6. Mehrwagenfach nach Anspruch 4 oder 5, wobei der Vorderaktuator ein drehbarer Laschenaktuator ist, der mit der Stange verbunden ist.

7. Mehrwagenfach nach einem der Ansprüche 2 bis 6, wobei das Mehrwagenfach eine Öffnung beinhaltet, und wobei die dritte Rückhaltevorrichtung Folgendes beinhaltet:
einen zweiten Vorderriegel (105a), der beweglich an der Aktuatorfläche montiert ist;
eine zweite Stange (105b), die sich von dem zweiten Vorderriegel nach hinten erstreckt; und
einen zweiten Zwischenriegel (105c), der beweglich an dem Mehrwagenfach an der Zwischenposition des Mehrwagenfachs montiert und mit der zweiten Stange verbunden ist, derart, dass der zweite Zwischenriegel durch den zweiten Vorderriegel betätigt wird, wobei der zweite Vorderriegel und der zweite Zwischenriegel ausgelegt sind, sich zusammen zwischen Folgendem zu bewegen:
einer Doppelsperrstellung, in der der zweite Vorderriegel die Öffnung des Mehrwagenfachs zumindest teilweise sperrt, um den vorderen Wagen innerhalb des Mehrwagenfachs am Verlassen des Mehrwagenfachs zu hindern, und sich der zweite Zwischenriegel in den Zwischenabschnitt des Mehrwagenfachs erstreckt, um den hinteren Wagen innerhalb des Mehrwagenfachs gegen ein Bewegen nach vorn in dem Mehrwagenfach zu sperren; und
einer Doppelfreigabestellung, in der der zweite Vorderriegel die Öffnung des Mehrwagenfachs nicht sperrt und der zweite Zwischenriegel den hinteren Wagen nicht gegen ein Entnehmen sperrt; und optional wobei in jeder Freigabestellung jeder Riegel (101a, 105a, 105c) horizontal ist und sich nicht nach unten in das Mehrwagenfach erstreckt.

8. Mehrwagenfach nach Anspruch 7, sofern von Anspruch 4 abhängig, wobei jeder Zwischenriegel (103c, 105c) in demselben Abstand von der Öffnung des Mehrwagenfachs positioniert ist; und optional wobei sich der erste Vorderriegel und der erste Zwischenriegel in einer ersten Richtung bewegen und sich der zweite Vorderriegel und der zweite Zwischenriegel in einer zweiten Richtung entgegengesetzt zu der ersten Richtung bewegen.

9. Mehrwagenfach nach Anspruch 7 oder 8, wobei das Mehrwagenfach eine Luftfahrzeugküche ist, die bemessen ist, mindestens einen standardmäßigen Wagen in voller Größe und mindestens einen standardmäßigen Wagen in halber Größe oder zwei standardmäßige Wagen in voller Größe aufzunehmen, wobei die Aktuatorfläche die Küchenarbeitsfläche ist, die ausgelegt ist, von einer oder mehreren Küchentüren abgedeckt zu werden.

10. Mehrwagenfach nach Anspruch 9, wobei ein hinterer Abschnitt des Mehrwagenfachs, hinter dem ersten und dem zweiten Zwischenriegel, bemessen ist, einen standardmäßigen Wagen in voller Größe aufzunehmen, und wobei ein vorderer Abschnitt des Mehrwagenfachs, vor dem ersten und dem zweiten Zwischenriegel, bemessen ist, einen standardmäßigen Wagen in halber Größe aufzunehmen; und
optional ferner umfassend das Mehrwagenfach und eine oder mehrere Küchentüren, die ausgelegt sind, das Mehrwagenfach einzuschließen, wobei die eine oder die mehreren Küchentüren (115) ausgelegt sind, den ersten Vorderriegel, den zweiten Vorderriegel und den Vorderaktuator nur dann aufzunehmen, wenn sich diese in einer jeweiligen Sperrstellung befinden, derart, dass die eine oder die mehreren Küchentüren ausgelegt sind, sich nur zu schließen, wenn sich alle Riegel in der Sperrstellung befinden.

11. Luftfahrzeugküche, umfassend:
das Mehrwagenfach nach einem der Ansprüche 1 bis 10; optional umfassend einen Anschlag (1700), der ausgelegt ist, in dem Mehrwagenfach montiert zu werden, und ein austauschbares Füllstück (1701) zum Aufnehmen unterschiedlich langer Wagen in voller Größe und/oder in halber Größe aufweist.

12. Verfahren zum Betreiben eines Mehrwagenfachs (300) einer Luftfahrzeugküche, wobei das Mehrwagenfach das Mehrwagenfach nach Anspruch 7 ist, sofern von Anspruch 4 abhängig, oder nach den Ansprüchen 8-10, wobei das Verfahren Folgendes umfasst:
Bewegen des ersten Vorderriegels (101a) der Luftfahrzeugküche von der ersten Vorderriegelsperrstellung in die erste Vorderriegelfreigabestellung, um den vorderen Wagen (107a) teilweise freizugeben; und
nach Bewegen des ersten Vorderriegels (101a) in die erste Vorderriegelfreigabestellung, und während der erste Zwischenriegel (103c) der Luftfahrzeugküche in der ersten Zwischenriegelsperrstellung belassen wird, Bewegen des zweiten Vorderriegels (105a) und des zweiten Zwischenriegels (105c) der Luftfahrzeugküche zusammen in die Doppelfreigabestellung, um den vorderen Wagen vollständig freizugeben, während der hintere Wagen (107b) weiterhin gegen ein Bewegen nach vorn gesperrt wird;
Bewegen des ersten Zwischenriegels in eine erste Zwischenriegelfreigabestellung, um den hinteren Wagen freizugeben.

13. Verfahren nach Anspruch 12, ferner umfassend Entnehmen des vorderen Wagens aus der Luftfahrzeugküche nach Bewegen des zweiten Vorderriegels und der zweiten Zwischenrückhaltevorrichtung in die Doppelfreigabestellung.

14. Verfahren nach Anspruch 12, ferner umfassend Entnehmen des hinteren Wagens aus der Luftfahrzeugküche nach Bewegen des ersten Zwischenriegels in die erste Zwischenriegelfreigabestellung; und optional ferner umfassend Durchführen des Verfahrens in umgekehrter Reihenfolge, um den hinteren Wagen und den vorderen Wagen einzulagern.

## Revendications

1. Compartiment à chariots multiples (300) dans lequel le compartiment à chariots multiples comporte une surface d'actionneur (109) comprenant :
un chariot avant (107a) ;
un chariot arrière (107b) ;
un système de rétention de chariots (100) ; le système de rétention de chariots comprenant :
un premier dispositif de rétention (101) configuré pour retenir le chariot avant (107a) dans le compartiment à chariots multiples ;
un deuxième dispositif de rétention (103) configuré pour retenir le chariot arrière (107b) dans le compartiment à chariots multiples de telle sorte que le chariot arrière soit maintenu à distance du chariot avant ; et
un troisième dispositif de rétention (105) **caractérisé en ce que** le troisième dispositif de rétention est configuré pour retenir à la fois le chariot avant et le chariot arrière, et en outre configuré pour retenir le chariot avant et le chariot arrière dans le compartiment à chariots multiples de manière à ce qu'ils soient séparés l'un de l'autre de sorte que le chariot arrière soit maintenu à distance du chariot avant.

2. Compartiment à chariots multiples selon la revendication 1, dans lequel le premier dispositif de rétention comprend un premier loquet avant (101a) monté de manière amovible sur la surface d'actionneur (109) et configuré pour se déplacer entre :
une position de blocage de premier loquet avant où le premier loquet avant bloque au moins partiellement une ouverture du compartiment à chariots multiples afin de retenir le chariot avant à l'intérieur du compartiment à chariots multiples ; et
une première position de déblocage de loquet avant où le premier loquet avant ne bloque pas l'ouverture du compartiment à chariots multiples.

3. Compartiment à chariots multiples de la revendication 2, dans lequel le premier dispositif de rétention est constitué du premier loquet avant monté de manière amovible sur la surface d'actionneur.

4. Compartiment à chariots multiples selon la revendication 2 ou 3, dans lequel le compartiment comporte une partie intermédiaire, et dans lequel le deuxième dispositif de rétention comporte :
un actionneur avant (103a) monté sur ou traversant la surface d'actionneur et configuré pour se déplacer par rapport à la surface d'actionneur ;
une première tige (103b) s'étendant vers l'arrière à partir de l'actionneur avant ; et
un premier loquet intermédiaire (103c) monté de manière amovible sur le compartiment à chariots multiples, à une position intermédiaire du compartiment à chariots multiples, et relié à la première tige de telle sorte que le premier loquet intermédiaire soit actionné par l'actionneur avant, le premier loquet intermédiaire étant configuré pour se déplacer entre :
une position de blocage du premier loquet intermédiaire où le premier loquet intermédiaire s'étend dans la partie intermédiaire du compartiment à chariots multiples pour empêcher le chariot arrière à l'intérieur du compartiment à chariots multiples d'avancer dans le compartiment à chariots multiples ; et
une position de déblocage de premier loquet intermédiaire où le premier loquet intermédiaire ne bloque pas le chariot arrière.

5. Compartiment à chariots multiples selon la revendication 4, dans lequel le deuxième dispositif de rétention ne bloque pas le chariot avant dans la position de blocage du premier loquet intermédiaire, de telle sorte que le chariot avant puisse être retiré pendant que le chariot arrière est bloqué.

6. Compartiment à chariots multiples selon la revendication 4 ou 5, dans lequel l'actionneur avant est un actionneur à languette rotatif relié à la tige.

7. Compartiment à chariots multiples selon l'une quelconque des revendications 2 à 6, dans lequel le compartiment à chariots multiples comporte une ouverture et dans lequel le troisième dispositif de rétention comprend :
un second loquet avant (105a) monté de manière amovible sur la surface d'actionneur ;
une seconde tige (105b) s'étendant vers l'arrière à partir du second loquet avant ; et
un second loquet intermédiaire (105c) monté de manière amovible sur le compartiment à chariots multiples situé à la position intermédiaire du compartiment à chariots multiples et relié à la seconde tige de sorte que le second loquet intermédiaire soit actionné par le second loquet avant, dans lequel le second loquet avant et le second loquet intermédiaire sont configurés pour se déplacer ensemble entre :
une position de blocage double dans laquelle le second loquet avant bloque au moins partiellement l'ouverture du compartiment à chariots multiples pour empêcher le chariot avant au sein du compartiment de sortir du compartiment à chariots multiples, et le second loquet intermédiaire s'étend dans la partie intermédiaire du compartiment à chariots multiples pour empêcher le chariot arrière au sein du compartiment à chariots multiples d'avancer à l'intérieur du compartiment à chariots multiples; et
une position de déblocage triple dans laquelle le second loquet avant ne bloque pas l'ouverture du compartiment à chariots multiples et le second loquet intermédiaire ne bloque pas le retrait du chariot arrière ; et, éventuellement, dans lequel, dans chaque position de déblocage, chaque loquet (101a, 105a, 105c) est horizontal et ne s'étend pas vers le bas dans le compartiment à chariots multiples.

8. Compartiment à chariots multiples selon la revendication 7, lorsqu'il est fonction de la revendication 4, dans lequel chaque loquet intermédiaire (103c, 105c) est positionné à équidistance de l'ouverture du compartiment à chariots multiples ; et dans lequel, éventuellement, le premier loquet avant et le premier loquet intermédiaire se déplacent dans une première direction, alors que le second loquet avant et le second loquet intermédiaire se déplacent dans une seconde direction opposée à la première.

9. Compartiment à chariots multiples selon la revendication 7 ou 8, dans lequel le compartiment à chariots multiples est une cuisine de bord d'aéronef dimensionnée de manière à pouvoir accueillir au moins un chariot standard de taille normale et au moins un chariot standard de demi-taille, ou deux chariots standard de taille normale, et dans lequel la surface d'actionneur est le plateau de travail de la cuisine, configuré pour être recouvert par une ou plusieurs portes de cuisine.

10. Compartiment à chariots multiples selon la revendication 9, dans lequel une partie arrière du compartiment à chariots multiples, située en arrière des premier et second loquets intermédiaires, est dimensionnée de manière à accueillir un chariot standard de taille normale, et dans lequel une partie avant du compartiment à chariots multiples, située en avant des premier et second loquets intermédiaires, est dimensionnée de manière à accueillir un chariot standard de demi-taille ; et
comprenant éventuellement en outre le compartiment à chariots multiples et une ou plusieurs portes de cuisine configurées pour enceindre le compartiment à chariots multiples, dans lequel la ou les portes de cuisine (115) sont configurées pour recevoir le premier loquet avant, le second loquet avant et l'actionneur avant uniquement lorsqu'elles sont dans une position de blocage respective, de telle sorte que la ou les portes de cuisine ne puissent se fermer que lorsque tous les loquets sont en position de blocage.

11. Cuisine de bord d'aéronef, comprenant :
le compartiment à chariots multiples selon l'une quelconque des revendications 1 à 10 ; comprenant éventuellement un dispositif antiretour (1700) configuré pour être monté dans le compartiment à chariots multiples et comportant un dispositif de fixation interchangeable (1701) destiné à accueillir des chariots de taille normale et/ou de demi-taille de différentes longueurs.

12. Procédé de fonctionnement d'un compartiment à chariots multiples (300) d'une cuisine de bord d'aéronef, dans lequel le compartiment à chariots multiples est celui de la revendication 7, lorsqu'il est fonction de la revendication 4 ou des revendications 8 à 10, le procédé de fonctionnement comprenant :
le déplacement du premier loquet avant (101a) de la cuisine de bord d'aéronef de la position de blocage du premier loquet avant à la position de déblocage du premier loquet avant afin de débloquer partiellement le chariot avant (107a) ; et
après avoir déplacé le premier loquet avant (101a) vers la première position de déblocage de loquet avant, et tout en laissant le premier loquet intermédiaire (103c) de la cuisine de bord d'aéronef dans la position de blocage du premier loquet intermédiaire, le déplacement du second loquet avant (105a) et du second loquet intermédiaire (105c) de la cuisine de bord d'aéronef vers la position de déblocage double afin de débloquer complètement le chariot avant tout en continuant à empêcher le chariot arrière (107b) d'avancer ;
le déplacement du premier loquet intermédiaire vers une position de déblocage du premier loquet intermédiaire afin de libérer le chariot arrière.

13. Procédé selon la revendication 12, comprenant en outre le retrait du chariot avant de la cuisine de bord d'aéronef après avoir déplacé le second loquet avant et le deuxième dispositif de rétention intermédiaire vers la position de déblocage double.

14. Procédé selon la revendication 12, comprenant en outre le retrait du chariot arrière de la cuisine de bord d'aéronef après avoir déplacé le premier loquet intermédiaire vers la position de déblocage de premier loquet intermédiaire ; et comprenant éventuellement en outre la mise en œuvre du procédé dans l'ordre inverse afin de ranger le chariot arrière et le chariot avant.
